# EUROPEAN PATENT APPLICATION

(11) **EP 4 147 984 A2**
(43) Date of publication of application: **15.03.2023**
(21) Application number: 22151990.3
(22) Date of filing: 28.11.2013
(51) Int. Cl.: B65B 25/08

(54) **APPARATUS FOR PLACING ARTICLES ON LEAVES**

(30) Priority: 28.11.2012 NL 1039918; 06.12.2012 US 201261733937 P
(62) Divisional of application: 13802725.5
(71) Applicant: Sleegers Techniek B.V., 5253 RH Nieuwkuijk (NL)
(72) Inventor: SLEEGERS, Hubertus Theodorus Wilhelmus, 5253 RH Nieuwkuijk (NL)
(74) Representative: Wolterink, Isabelle

(57) **Abstract**

Conveyance device for items, comprising:
- a frame with a housing (3);
- at least one belt conveyor (10) for the items, which belt conveyor is provided with a feed end and an output end;
- a drive for the belt conveyor, which drive comprises a drive shaft (82) and a driven drive roll (83) for the belt of the belt conveyor and a transmission between the drive shaft and the drive roll,
wherein the drive shaft extends through a holder attached to the housing, which holder bears a support for the belt conveyor, which support comprises at least one support member extending adjacent the drive shaft and being releasably connected to the belt conveyor.

## Description

### BACKGROUND OF THE INVENTION

When packaging articles or items it is possible to place the items on leaves, individually or in groups, as a result of which the further processing in the packaging process, particularly stacking the articles or groups of articles, can be enhanced and furthermore the user of the products will be able to separate the items more easily. This is particularly of importance in case the items tend to stick together.

In particular, though not exclusively, this takes place when packaging foodstuffs, in particularly slices, such as meat products, fish products and cheese.

In a known arrangement slices are cut off from for instance a chunk of meat or cheese or from fish by means of a slicer. The cut slices are collected on a belt conveyor and supplied by it to a next belt conveyor, wherein below the transition between both belt conveyors a leaf supplier (in the art called underleaver or interleaver) is positioned. Said leaf supplier successively delivers leaves cut off or pulled off (after perforation) from a web of leaf material, such as paper, in the said transition, such that on the said next conveyor the slices rest on the leaf intended for them. In case stacking is wanted, the leaves with the slices borne on them are transported onwards by said conveyor to yet another belt conveyor, which can be operated such that several assemblies of leaf + slice are positioned in the desired formation, such as a straight stack or in imbricated layers. The formation formed is then delivered to a next conveyor for further processing, which is not relevant here.

An important problem may arise when supplying the separated leaves. The web of leaf material is pulled off from a roll by a first drive roll assembly. Between the roll and the drive roll assembly the web is kept tight using dancer rolls. Immediately above the drive roll assembly a blade roll assembly is positioned, where the web is cut/perforated partially or in part in view of consecutively separating the leaves. The separated leaves or leaves to be separated are engaged by a second drive roll assembly accelerating the leaves -optionally while separating by tearing them loose- and delivering them according to an upward path. The leaves are guided by stainless steel guiding wires positioned on both sides of the upward path, up to near the lower side of both conveyors forming the transition. The frequency at which this happens is high: a few hundred leaves per minute. When a paper malfunction occurs in the leaf supplier this will have a highly negative impact on the process, not just because paper will accumulate, making the malfunction grow worse, but also because a series of items will not be provided with a leaf.

In order to notice the paper malfunction in its early stages, controls have been developed having sensors that immediately notice a paper malfunction and then have the paper supply and item supply stopped, see for instance US Patent Application 2002/0089110. The operator will be able to put the paper malfunction right using a tool, such as a screw driver.

However, the existing arrangements can be improved as regards the prevention of a paper malfunction and putting it right, should a paper malfunction nonetheless have arisen.

### SUMMARY OF THE INVENTION

It is an object of the invention to provide a device for placing items, such as food items, on leaves, wherein a malfunction in the supply of leaves is prevented to a large extent.

It is an object of the invention to provide a device for placing items, such as food items, on leaves, wherein a malfunction in the supply of leaves is easy to put right.

For achieving at least one of these objectives, according to one aspect the invention provides a device for placing items, such as food items on leaves, comprising:
- a frame having an item supplier for the items, which item supplier is provided with a feed end and an output end;
- a discharger for items placed on leaves, which discharger is provided with a feed end and an output end,

wherein the item supplier and the discharger define a transition area at their respective output end and feed end; and
   - a stock holder for a web of leaf material
   - a leaf supplier for the leaves, which leaf supplier is provided with a first drive for the web of leaf material, with a separator device for consecutively separating leaves from the web of leaf material and with a second drive for passing said leaves to the transition area,
wherein the leaf supplier is positioned in the frame below the transition area for upward delivery of the leaves in the transition area,
wherein the discharger is designed as a belt conveyor which at the feed end has an end roll for the belt of the belt conveyor,
wherein the leaf supplier is provided with first and second guides for guiding the leaves in an upward path at least from the separator device into the transition area,
wherein the first and second guide are situated on the sides of the upward path facing the item supplier and facing the discharger, respectively, and
wherein the first guide extends upwards to above the level of the lower side of the end roll in particular up to or above the rotary centre line of the end roll.

In that way it is realised that the leaves are guided in their upward path for as long as possible, in particular until at the location of the end roll they get into engagement with the belt(s) of the discharger. The risk of undesirable movements of the leaves is thus limited to a minimum, and thus the risk of malfunctions resulting therefrom.

It is noted that the end roll may be a drive roll or an idle roll.

In one embodiment the item supplier is designed as a belt conveyor, at the output end having an end roll designed as a nose roll. Nose roll means a roll that usually is not driven and which relative to the opposing, usually driven end roll has a small diameter and as a result forms a thin end of the belt conveyor. The nose roll creates a space below the discharge end of the item supplier which space can be used for the first guide.

Preferably the nose roll is pivotable between a folded down belt operational position at a relatively short distance from the feed end of the discharger and a folded up maintenance position at a larger distance from the feed end of the discharger in which the upper end of the first guide is accessible to at least the fingers of a hand, in particular the hand. In that way the operator can easily access the optionally jammed leaves from above, thus shortening the time involved in putting the malfunction right and furthermore reducing the risk of damage to the parts and injury to the operator.

Regarding the same aspects described in the previous sentence, further advantages can be achieved if the first guide comprises a number of elongated guide elements, such as wires, and a transverse rod in the upper end of the first guide, to which rod the guide elements are connected, wherein the transverse rod is movable between an operational position at a relatively short distance from the feed end of the discharger and a maintenance position at a larger distance from the feed end of the discharger, for providing access to a hand, at least its fingers, between the first and second guides. In that case the transverse rod can be moveable by swinging about a horizontal centre line transverse to the transport direction of the discharger, which centre line preferably is situated below the second drive.

In view of the said guide the transverse rod can be situated entirely above the level of the lower side of the end roll of the discharger, preferably entirely above the rotary centre line of the end roll of the discharger.

The accessibility, in particular from above, of the leaf supplier can be considerably enhanced if the second drive of the leaf supplier comprises a nip having a driven drive roll and an idle counter roll, wherein the drive roll and the counter roll are situated on either side of the upward path, respectively, preferably on the sides of the upward path facing the discharger and facing the item supplier, respectively, and wherein the counter roll can be biased towards the drive roll by means of a biasing device and can be released from the biasing device for movement of the counter roll between an operational position at a relatively short distance from or against the drive roll and a maintenance position at a larger distance from the drive roll. By releasing the counter roll a larger freedom for the movement thereof is obtained.

In that case the counter roll can be attached to a holder, which itself is biased by the biasing device for biasing the counter roll towards the drive roll and can be released therefrom by activating the biasing device in a direction opposite the biasing direction.

The counter roll, preferably provided with grooves for accommodating guide elements, can be moveable by swinging about a horizontal centre line transverse to the transport direction of the discharger, wherein in a compact embodiment said centre line is situated below the second drive, preferably below the first drive as well, preferably substantially straight below the first drive. The counter roll, that may or may not be attached to the holder, may in the maintenance position be situated lower than it is in the operational position, which further enhances the accessibility to the hand or the fingers of the hand of the operator.

In a compact embodiment the biasing device comprises cylinders, in particular pneumatic cylinders, for biasing the counter roll towards the drive roll, which cylinders can also be operated for blocking against said movement and releasing the counter roll for said movement, respectively. In the operational position the cylinders can be substantially horizontally oriented.

The first drive of the leaf supplier as well may, as known per se, comprise a nip having a driven drive roll and an idle counter roll, wherein the drive roll and the counter roll are situated on the sides of the upward path facing the discharger and facing the item supplier, respectively, and wherein the counter roll is moveable between an operational position at a relatively short distance from the drive roll and a maintenance position at a larger distance from the drive roll. In that case the counter roll can be moveable by swinging about a horizontal centre line transverse to the transport direction of the discharger. In that case the device can be provided with cylinders, preferably pneumatic cylinders, for biasing the counter roll towards the drive roll, which cylinders can also be activated oppositely so that the counter roll is moveable away from the drive roll. In a compact arrangement the cylinders are positioned substantially vertically with preferably upward workload for said biasing. The piston rods may then be located above the cylinder housings.

In that case the counter roll can be attached to a holder, which itself is biased by the biasing device for biasing the counter roll towards the drive roll and which can be swung away from the drive roll by activating the biasing device in a direction opposite the biasing direction.

In a compact embodiment of the device according to the invention both said horizontal centre lines coincide.

The device according to the invention can furthermore be provided with a conveyor arranged downstream from the discharger, at its output end, for receiving the items placed on leaves and forming them into a stack. Such a stacking conveyor, which can be driven in two opposite directions, is also called stacker.

According to a further aspect the invention provides an assembly of a device according to the invention as discussed above and a supply device for the items, which supply device is positioned for delivery of the items to the item supplier, the supply device for instance comprising a cutting device for supplying slices or supplying pieces of meat, poultry or fish, such as hamburgers, chicken fillets, or fish fillets.

A further relevant point in devices of the type mentioned in the preamble is the maintenance of the separator device.

It is an object of the invention to facilitate the maintenance of the separator device.

According to a further aspect the invention to that end provides a device for placing items on leaves, comprising:
- a frame having an item supplier for the items, which item supplier is provided with a feed end and an output end;
- a discharger for items placed on leaves, which discharger is provided with a feed end and an output end,

wherein the item supplier and the discharger define a transition area at their respective output end and feed end; and
   - a stock holder for a web of leaf material
   - a leaf supplier for the leaves, which leaf supplier is provided with a first drive for the web of leaf material, with a separator device for consecutively separating leaves from the web of leaf material by perforating, making incisions or cutting through, and with a second drive for passing the leaves to the transition area,
wherein the leaf supplier is positioned in the frame at the transition area for delivery, preferably upward delivery, of the leaves in the transition area,
wherein the leaf supplier is arranged in a sub-frame, which is releasably attached in the frame, wherein the separator device comprises a blade roll and a counter roll that are drivingly connected to each other, wherein the blade roll and the counter roll are attached in a cassette that is releasably attached in the sub-frame as one unity. After taking out the cassette the mechanic is able to service with overview and in a controlled manner.

In one embodiment the cassette can be slid in and out of the sub-frame in a substantially horizontal direction, preferably in a direction parallel to the transport direction of the discharger. The horizontal direction preferably is oriented counter the transport direction of the discharger.

At the ends of the rolls the cassette can be provided with chambers, in which the rolls are bearing mounted, which chambers are also formed for forming a sliding connection with the sub-frame. The distance between the rolls is fixed here, which enhances the reliability of the operation of the cutter.

The blade roll and the counter roll can be situated on the sides of the upward path facing the item supplier and facing the discharger, respectively.

In order to reduce the moment of inertia of the blade roll, as a result of which its acceleration and deceleration take less time, the blade roll can be provided with cavities.

In case guides such as guiding wires are present, the blade roll will at the location of the guides be interrupted so that a perfect separation will not yet be achieved. As stated the leading leaves can then be pulled off from the web of leaf material by the second drive. It is also possible that the blade roll is designed for making a series of perforations.

A further object of the invention is to simplify the suspension of a belt conveyor, in particular a belt conveyor for a device of the type mentioned in the preamble.

According to another aspect for that purpose the invention provides a conveyance device for items, comprising:
- a frame with a housing;
- at least one belt conveyor for the items, which belt conveyor is provided with a feed end and an output end;
- a drive for the belt conveyor, which drive comprises a drive shaft and a driven drive roll for the belt of the belt conveyor and a transmission between the drive shaft and the drive roll,
wherein the drive shaft extends through a holder attached to the housing, which holder bears a support for the belt conveyor, which support comprises at least one support member extending adjacent the drive shaft and being releasably connected to the belt conveyor. Thus the location of the connection of the support for the conveyor to the housing is to a large extent combined with the location where the drive shaft projects out of or from the housing. Adjacent that location the space between the belt conveyor and the housing can remain free. This may be advantageous in connection with preventing pollutions. The holder may also cooperate in the prevention of access of pollutants to the rotating parts for the drive at the location of the driven end of the drive shaft.

The support member can extend parallel to the drive shaft, preferably over at least almost the width of the conveyor. In one embodiment the support has two support members extending on either side of the drive shaft, preferably equidistanced from the drive shaft.

For facilitating the belt conveyor's disassembly/assembly, the belt conveyor may have a frame that can be slid onto the support members. The frame of the belt conveyor may in that case comprise pipes, in which the support members can be fittingly accommodated. The support members can then be secured on the frame, in particular in the pipes, against sliding in longitudinal direction, for instance using screw knobs. A kinematic reversal is also possible, wherein the support members are tubes or pipes and the frame of the belt conveyor has rods that can be fittingly inserted into the tubes or pipes.

In a further development the drive comprises a first drive part accommodated in the housing and comprising a motor, and a second drive part comprising the drive shaft, wherein the first and the second drive part are provided with first and second coupling members that can be releasably coupled to each other in axial direction for rotational driving of the drive shaft. In that way coupling/uncoupling is possible in the same direction as, and simultaneously with, the removal of the conveyor from the support, . In that way the conveyor with drive shaft can only be attached to the housing by the attachment to the support members, in an easily releasable manner.

Access of pollutants is largely prevented if the location of coupling is situated within the holder and/or partially within the housing.

In a simple embodiment the first and the second coupling member form a multiple axial mortise and tenon joint. In that way coupling/uncoupling is simple and can be almost clearance-free, as well as wear-resistant, contrary to the known gear wheel couplings.

In an embodiment that is advantageous as regards stability, the drive shaft has a rotary centre line that at least almost contains the centre of gravity of the belt conveyor.

The support with the support member can be attached to the frame in a manner so as to be tiltable in a vertical plane containing the process direction, wherein the tilting motion has a tilting centre line coinciding with the rotary centre line of the drive shaft in question, wherein the device is furthermore provided with an adjustment device for adjusting the angle of tilt of the conveyor in question in the vertical plane.

As already stated the items to be processed can be of a different nature. For instance items in the one batch may be considerably thicker than the items in the other batch. When changing the type of item, in case of stacking adjustment problems for the operation of the stacking conveyor may arise, as a result of which the desired stacking/formation is not realised, at least not in the required accurate way.

It is an object of the invention to improve on this.

According to a further aspect the invention for that purpose provides a device for conveying items, such as food items, comprising:
- a frame;
- a first conveyor for the items that is arranged on the frame, which first conveyor is provided with a feed end and an output end and a first drive;
- a second conveyor for the items that is arranged on the frame, downstream from the first conveyor in process direction, which second conveyor is provided with a feed end and an output end and a drive,

wherein at the output end of the first conveyor the first conveyor and the second conveyor define a vertical intermediate space,
wherein the height of the intermediate space (vertical dimension) can be adjusted.

By adjusting the intermediate space the vertical distance from the output end of the output end of the first conveyor to the second conveyor (stacker) can easily be adjusted to the thickness of the items to be processed. The dropping height and dropping time of the item in the transition from the first conveyor to the second conveyor can thus be set, as a result of which other interventions in the operation of the second conveyor will not be required so soon. In case of thicker items stacking can also take place in an area of overlap of the first and second conveyor, should such an area of overlap be present.

In one embodiment the output end of the first conveyor extends over the feed end of the second conveyor, as a result of which an upstream portion of the second conveyor is available for the formation of items thereon behind the location where items land.

In one embodiment the device is provided with a control for selectively driving the second conveyor in two opposing directions.

In a simple embodiment the first conveyor and/or the second conveyor is attached to the frame so as to be tiltable in a vertical plane containing the process direction, by means of a respective first or second support, wherein the device is furthermore provided with an adjustment device for adjusting the angle of tilt of the conveyor in question in the vertical plane. In that way the angle of the second conveyor can be adjusted not just for adjusting the dimension of the intermediate space but also to adapt to the type of item to be taken over from the first conveyor. A steeper inclination in process direction can realise the desired deceleration for the items that land on the second conveyor possibly at high speed.

The conveyor in question can be a belt conveyor having a first and a second drive shaft, respectively, which for driving is coupled to a respective motor of the drive, wherein in the tilting motion the first or second support can be pivoted about a centre line coinciding with the rotary centre line of the drive shaft in question. The support in question can in that case have two support members extending on either side of the drive shaft, in particular parallel thereto, preferably equidistanced from the drive shaft. Adjustment is further facilitated if the drive shaft has a rotary centre line that contains at least almost the centre of gravity of the belt conveyor.

Alternatively or additionally the first conveyor and/or the second conveyor can be attached to the frame so as to be vertically moveable in a vertical plane containing the process direction, by means of a respective first or second support, wherein the device is furthermore provided with an adjustment device for adjusting the vertical position of the support of the conveyor in question.

Such an adjustment can advantageously be incorporated in a device in which items are placed on leaves, as discussed above. For that purpose the device will furthermore comprise a leaf supplier for supplying leaves to the feed end of the first conveyor and
- an item supplier for supplying items to the feed end of the first conveyor, and
- a control for adapting the item supplier and the leaf supplier to one another so that the items on the first conveyor are supported on the leaves.

According to a further aspect the invention provides a device for conveying items, such as food items, comprising:
- a frame;
- a belt conveyor for the items that is arranged on the frame, with a drive shaft for driving the belt conveyor,

wherein by means of a support, the belt conveyor is attached to the frame so as to be tiltable in a vertical plane containing the process direction,
further provided with an adjustment device for adjusting the angle of tilt of the conveyor in question in the vertical plane,
wherein in the tilting motion the support is pivotable about a centre line coinciding with the rotary centre line of the drive shaft.

The support can have two support members extending on either side of the drive shaft, in particular parallel thereto, preferably equidistanced therefrom. The drive shaft can also have a rotary centre line that at least almost contains the centre of gravity of the belt conveyor.

In devices for separating leaves from a web of leaf material, the web of leaf material is held tight between a stock roll and the cutter by means of dancer rolls, which by means of coil springs are attached to the frame of the device. When altering type and dimensions of the web of leaf material the action of the springs may not suffice.

It is an object of the invention to improve on this.

According to a further aspect, the invention for that purpose provides a device for consecutively separating leaves from a web of leaf material, comprising:
- a frame;
- a separator device arranged in the frame for consecutively separating leaves from the web of leaf material;
- a stock holder arranged in the frame for a roll of the web of leaf material;
- a drive arranged in the frame for transporting the web of leaf material from the roll towards the separator device;
- a number of dancer rolls arranged in the frame between the stock holder and the drive,
wherein at least one of the dancer rolls is arranged on an arm that is attached to the frame so as to be rotatable in a vertical plane, wherein the device furthermore comprises a pneumatic cylinder that is operative between the arm and the frame and a control for adjusting the workload of the pneumatic cylinder.

In that way the spring action can easily and in a controlled manner be adapted to the leaf material.

In a further embodiment the device is provided with two such arms each having at least one dancer roll, wherein each arm is provided with a said pneumatic cylinder. Preferably each arm bears at least two dancer rolls.

Such a device can also be incorporated in a device of the type mentioned in the preamble, particularly in a device for placing items, such as food items, on leaves, comprising:
- a frame having an item supplier for the items, which item supplier is provided with a feed end and an output end;
- a discharger for items placed on leaves, which discharger is provided with a feed end and an output end,

wherein the item supplier and the discharger define a transition area at their respective output end and feed end; and
   - a stock holder for a web of leaf material;
   - a device according to claims 48, 49 or 50, provided with a drive for consecutively passing separated leaves to the transition area,
wherein the drive is positioned in the frame below the transition area for upward delivery of the leaves in the transition area.

According to a further aspect the invention provides a production line in which a device according to the invention has been included.

Further embodiments of devices according to the invention are described in the claims the contents of which should be considered inserted herein.

It is noted that US 3.849.969 shows a device for enveloping the front edge, top side and bottom side of hamburgers. A web of leaf material is supplied from above by a driven roll pair, passes through a blade roll arrangement and is subsequently guided in downward direction between upper guides positioned on either side of the downward path, to the transition area between two pairs of belt conveyors, each consisting of an upper and a lower belt conveyor. The blade rolls cut off a leaf from the web of leaf material adapted to the position and speed of an oncoming hamburger. The cut off lead intersects the path of the oncoming hamburger and with the lower edge enters between two bottom guides, while being kept flat by a jet of air. When encountering the cut off leaf the hamburger will take along said leaf while said surfaces thereof are covered by the leaf. The inlet edge of the upper, upstream guide is situated below the upper side of the drive roll of the upper belt conveyor of the pair of discharging belt conveyors.

It is further noted that US 4.236.855 describes a device in which groups of items such as hamburgers, are placed on leaves. A web of leaf material is guided upwards towards the path of the items between consecutively a first pair of driven rolls, a pair of blade rolls and a second and third pair of driven rolls. The driven rolls of each pair of driven rolls situated on the downstream side of the upward path are spring-biased towards the other drive rolls. By means of an L-shaped lever, through cam operation, the roll shaft of said spring-biased driven roll can be shifted to a limited extent counter the spring bias direction, the roll ends being guided in a slot.

The aspects and measures described in this description and the claims of the application and/or shown in the drawings of this application may where possible also be used individually. Said individual aspects, such as the sub-frame, the cassette, the attachment of the dancer rolls and the releasable support of the belt conveyor, may be the subject of divisional patent applications relating thereto. This particularly applies to the measures and aspects that are described per se in the sub claims.

### BRIEF DESCRIPTION OF THE DRAWINGS

The invention will be elucidated on the basis of a number of exemplary embodiments shown in the attached drawings, in which:
Figures 1A-D show a diagonal top/front view, a front view, a side view and a top view, respectively, of an exemplary embodiment of a device according to the invention;
Figures 2A, 2B show a front view and a diagonal top/front view, respectively, of a sub-frame of the device of figures 1A-D;
Figures 3A-C show a diagonal top/front view, a top view and a front view, respectively, of the arrangement of counter rolls for a leaf supplier in the device of figures 1A-D;
Figures 4A-C show a schematic front view of a web stock and leaf supplier for the device of figures 1A-D, a detail thereon, in position of use, and a detail thereon in a maintenance position, respectively;
Figures 5A-D show a diagonal top/front view of a sub-frame of figures 2A,B that has almost been taken out, a front view of said sub-frame and a top view and a diagonal top/front view of a blade cassette in the device of figures 1A-D, respectively;
Figure 6 shows a horizontal section of a coupling of a drive shaft for a drive roll for leaf material; and
Figures 7A-D show a horizontal section of a belt conveyor in the device of figures 1A-D, a diagonal rear view from the housing of the suspension of said conveyor and two front views of the device of figures 1A-D in various positions of use, respectively.

### DETAILED DESCRIPTION OF THE DRAWINGS

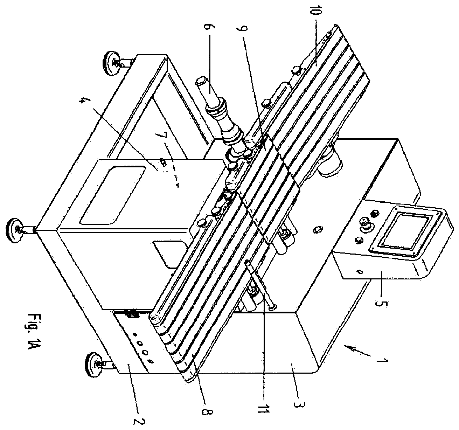

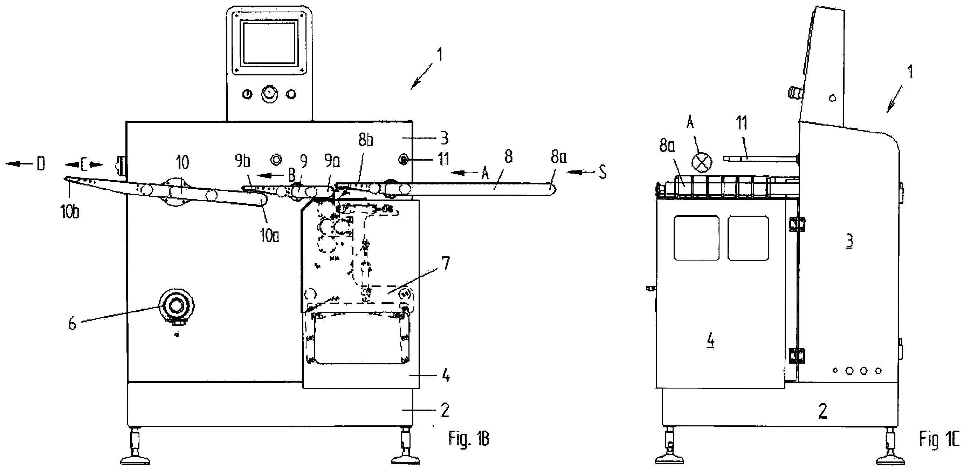

The device 1 in figures 1A-D comprises a frame 2 and a casing or housing 3 supported thereon, in which motors and control unit and control parts required for the operation of the device 1 are accommodated. The housing 3 comprises a control panel 5 including display and control buttons.

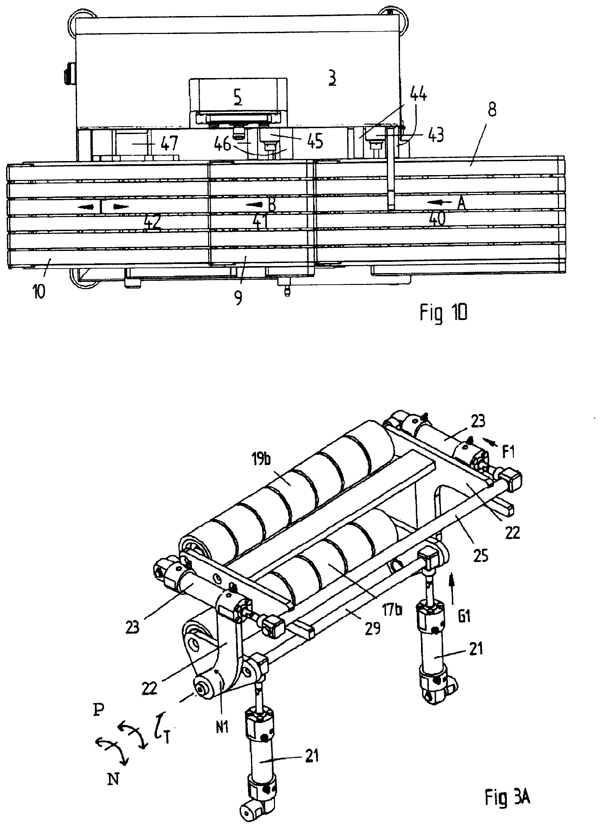

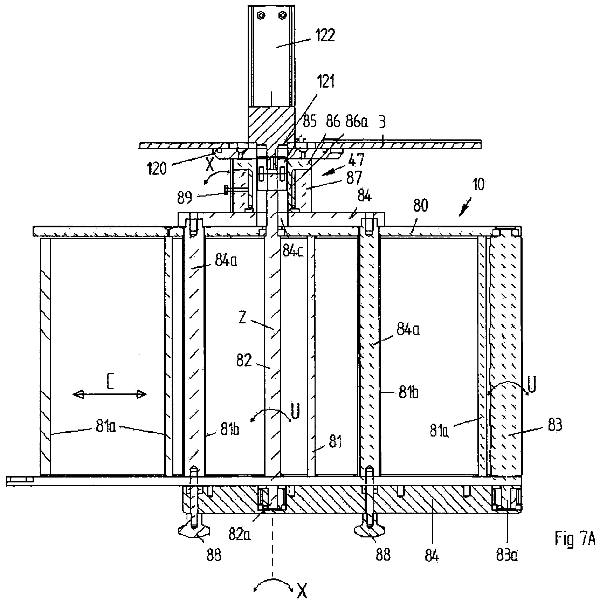

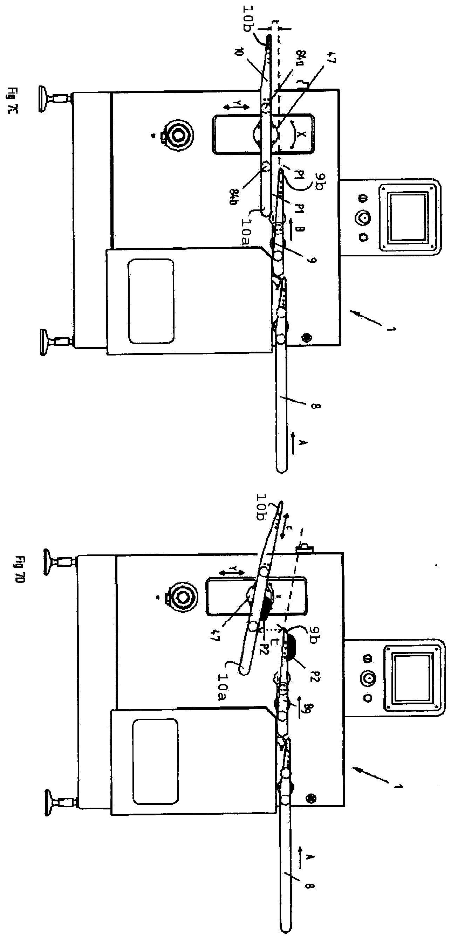

In front of the housing 3 a series of belt conveyors 8, 9 and 10 is arranged, which by means of support rods 44, 46 (figure 1D) and 84a,b (figure 7A) are supported on the housing 3 and are each provided with a drive shaft that is coupled at 43, 45 and 47 to the motor-driven drive parts in the housing 3. The belt conveyors 8, 9 and 10 each comprise a series of parallel belts 40, 41, 42 that can be driven in the directions A, B and C, respectively, (in two directions, using the control unit, in particular programmable). The belt conveyors 8, 9 and 10 each have a feed end 8a, 9a and 10a and an output end 8b, 9b and 10b.

Furthermore attached to the housing 3 is a drive shaft 6 to which a roll of web-shaped leaf material that is not shown can be placed. Below the output end 8b and the feed end 9a a casing 4 is supported on the frame 2, which casing is accessible at the front by a door and shields off a sub-frame 7. In figure 1B it is indicated in dashed lines that the sub-frame is adapted for upward passage of the web of leaf material to the transition area between the conveyors 8 and 9.

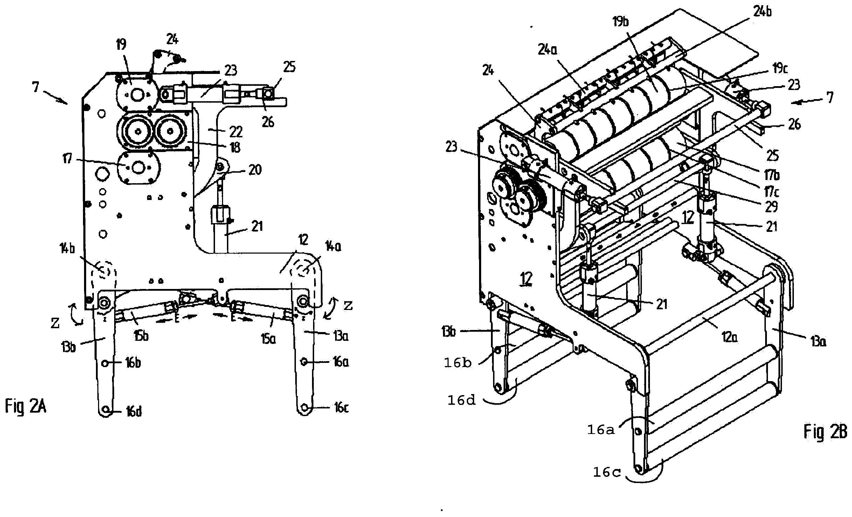

The sub-frame 7 is further shown in figures 2A and 2B, and forms a leaf supplier. It comprises two plates 12 that are attached to each other by among others rod 12a. At the bottom, at the location of hinges 14a,b two pairs of swinging arms 13a,b that can be swung up to the stop position shown (directions Z), are attached to the plates 12. The arms 13a,b are furthermore attached to the plates 12 via pneumatic cylinders 15a,b and carry dancer rolls 16a-d. The workload of the cylinders 15a,b can be adjusted, for setting a correct tension when changing the leaf material.

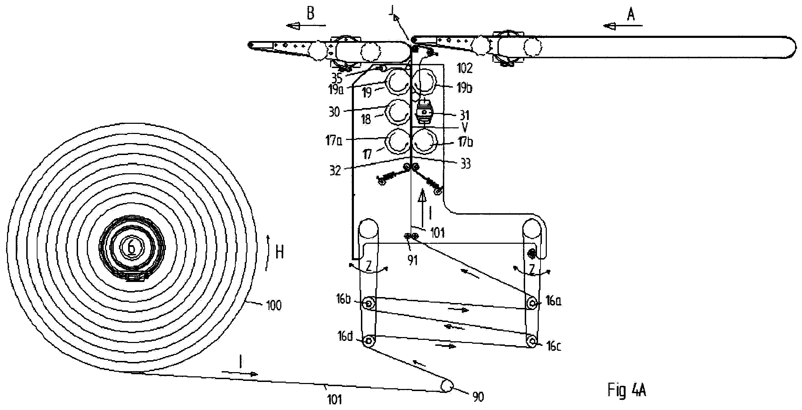

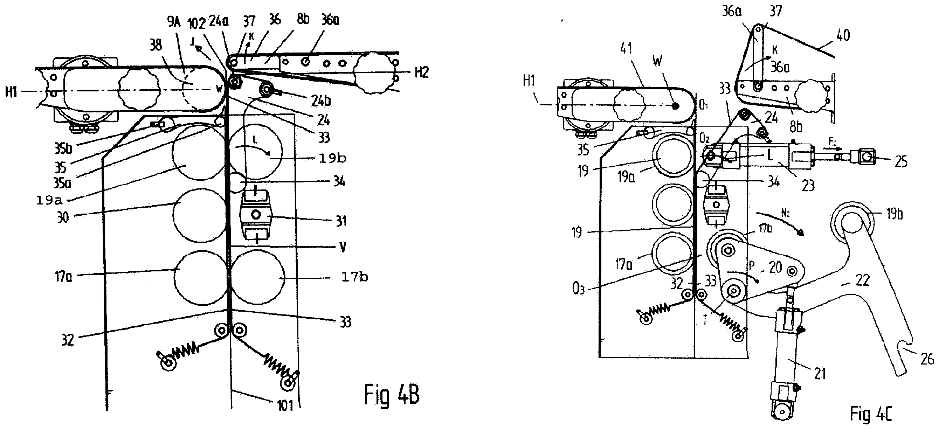

At the top (also see figures 2A and 2B), in a vertical series, considered from bottom to top, a first drive roll set 17 for the web of leaf material, a blade roll set or perforation roll set 18 and a second drive roll set 19 for leaves have been arranged. The drive roll set 17 comprises a driven roll 17a and an idle counter roll 17b, provided with grooves 17c. The drive roll set 19 comprises a driven roll 19a and an idle counter roll 19b, provided with grooves 19c. The rolls 17a and 19a are also provided with such grooves. Said grooves accommodate vertical guiding wires of a suitable synthetic material, which wires are further shown in among others figures 4A,B by 32, 33 and guide the web of leaf material or the leaves in their upward path V. At their lower ends, the wires 32,33 are kept taut by springs. The wires 33, situated at the upstream side, when considered in process direction A, B, and which therefore are situated at the side of the upward path or passage V facing the item supplier 8, are attached with their upper ends to a holder 24 comprising two rods 24a,b. The wires are put about rod 24a and with their ends are attached to rod 24b. At its lower end, the holder 24 by legs 34 is attached to the plates 12 so as to be swingable (direction L) between drive roll set 19 and blade roll set 18.

The counter wires 32 are attached with their upper ends to a rod 35b of a holder 35, after they have been put around rod 35a, which defines the highest point for the wires 32, as close as possible to the lower side of the feed end of the belt conveyor 9. The wires 32 are therefore situated on the side of the upward path or passage V facing the discharger 9.

It can be seen that the rod 24a defines the highest point for the wires 33. Said highest point is in the horizontal plane H2, situated above horizontal plane H1, which plane H1 contains the rotary centre line W of the end roll 38 of the belt conveyor 9. The leaves 102 are thus guided to a high level on the upstream side of the passage V.

In figure 4B it is furthermore shown that the output end 8b is designed relatively thin, as the end roll 37 has a relatively small diameter (compare end roll 38), is a so-called nose roll, and is furthermore attached to arms 36 that can be swung upwards about hinges 36a (direction K). The design as nose roll makes a high positioning of the rod 24a possible. In the operational position the arms 36 are retained in horizontal position by a snap connection, such as snap balls.

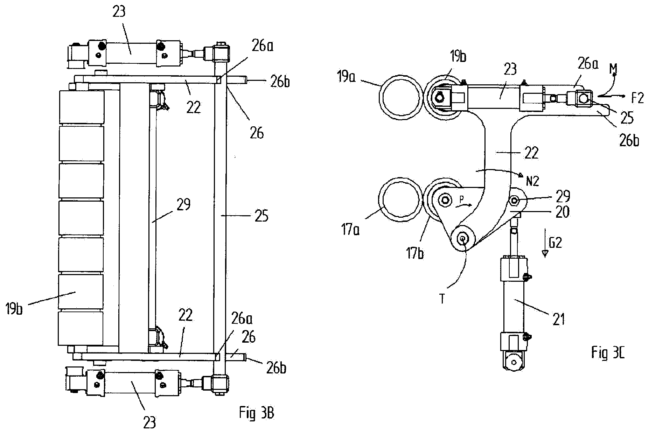

Also referring to figures 3A-C the suspension of the counter rolls 17b, 19b is now discussed. With its ends the counter roll 17b is attached to holders or swinging plates 20 that can be swung in directions P about centre line T, which holders or swinging plates are connected to each other by rod 29 and are attached to the bars of pneumatic cylinders 21 -which in the shown normal operational position of the device are vertical-, the other outer ends of which are attached to the plates 12. Due to the workload of cylinders 21 (direction G1) the counter roll 17b is pressed towards the drive roll 17a. The counter roll 19b is attached with its ends to an arm of approximately T-shaped holders or brackets 22, that are also attached to the plates 12 so as to be swung in directions N, about centre line T. In the other arm the brackets 22 form a slot 26 having a short upper lip 26a and a long lower lip 26b. A rod 25 is accommodated in the slot 26, the ends of which rod are attached to the bars of the pneumatic cylinders 23 21 -which in the shown normal operational position of the device are horizontal-, the other ends of which are attached to the plates 12. The cylinders 23 can be activated for (direction F1) pressing the bar 25 and thus the brackets 22 in the direction N1 and thus biasing the counter roll 19b towards the drive roll 19a.

In operation, the items, such as slices of meat products, are delivered in process direction S from a supply device (not shown), for instance a cutting device for supply of slices or a supply of pieces of meat, poultry or fish, such as hamburgers, chicken fillets, fish fillets to the feed end 8a of the conveyor 8 and transferred in the direction A to the conveyor 9. The intention is that the moment a slice is transferred from the output end 8b to feed end 9a of conveyor 9 an underleaf or interleaf is delivered by the leaf supplier, so that the slice is borne on a leaf on conveyor 9. The mutual adjustment is realised by means of said control unit and control parts. The operation of the leaf supplier is illustrated in figure 4A. The roll of paper web 100 on shaft 6 is driven in direction H. The web 101 runs in direction I towards and about steering rod 90 for correct alignment, and then about the set of dancer rolls 16a-d, between fixed rolls 91 and upwards in passage V, towards rolls 17a,b. The drive roll 17a pulls the web 101 from the roll 100. The web then arrives in the blade roll set or perforation roll set 18, where the blade roll 31 makes an incision or a series of perforations at the correct location. Said weakening can be perfect, when the web is severed entirely, or less perfect, in case of an incision, a series of perforations or, as in this example with guiding wires 32,33 passing through blade roll set 18, a series of cuts transections, and a prepared location of separation is created. The leading part of the web (provided with the weakening) is engaged by the rolls 19a,b wherein said part is also accelerated for full separation and is delivered as leaf 102 in the direction J in the said transition area between the conveyors 8 and 9.

In case of a web/leaf malfunction in the leaf supplier there are several options (after stopping the drives in the device). First of all it is possible to remedy the malfunction from above. To that end the operator flips the output end 8b of conveyor 8 upwards, direction K, vide figure 4C.

Should this not suffice, the operator will ensure that the cylinders 23 are extended, direction F2, so that the rod 25 is released from the upper lip 26a. The rod 25 can still stably find support on the lip 26b. Then, the operator can swing the bracket 22 downwards about centre line T (direction N2), wherein the upper lips 26a can move below the rod 25, so that the counter roll 19b will be situated at a larger distance from the passage V. Subsequently he takes the rod 24b in order to swing the holder 24 away, direction L, see figure 4C. A spacious access O1 and O2 (see figure 4C) has then been realised, in which the operator can easily manually remove optionally jammed paper material. After extending the cylinders 23 in direction F2, it is also possible to just swing the rod 24b away in direction L, wherein the guiding wires will take along the counter roll 19b, while the plates 22 are swung about centre line T.

Should the problem of a leaf malfunction be situated lower, the operator is able to have the cylinders 21 retracted so that the plates 20 tilt in direction P about centre line T, see figure 4C, in which way counter roll 17b is placed at distance O3 from drive roll 17a.

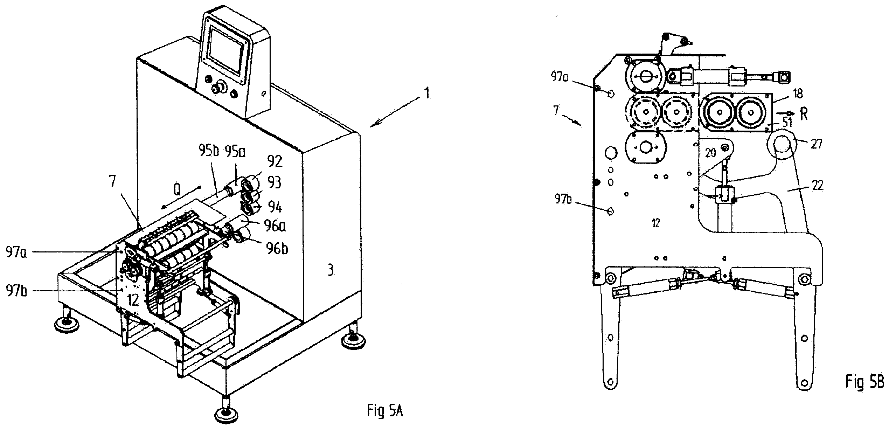

It may also be required to inspect the blade roll. For that purpose the blade roll set or perforation roll set 18 can be taken out from the sub-frame 7 like a cassette, see figure 5B, at that location in horizontal direction R. This can be done after the coupling with the drive parts in the housing 3 has been ended (which (see below) is possible by pulling the sub-frame 7 to the fore over a short distance in horizontal direction (figure 5A) after the casing 4 has been opened) and removing the guiding wires 32,33. To that end the housing 3 is provided with support rods 95b, 96b extending forward from supports 95a, 96a, onto which support rods tubes or pipes provided in the sub-frame 7 can be slid. By means of attachment members (not shown) that can be screwed in holes 97a,b and that are provided with knobs, the sub-frame 7, after having been slid onto the support rods 95a, 96b, can be secured to the housing 3.

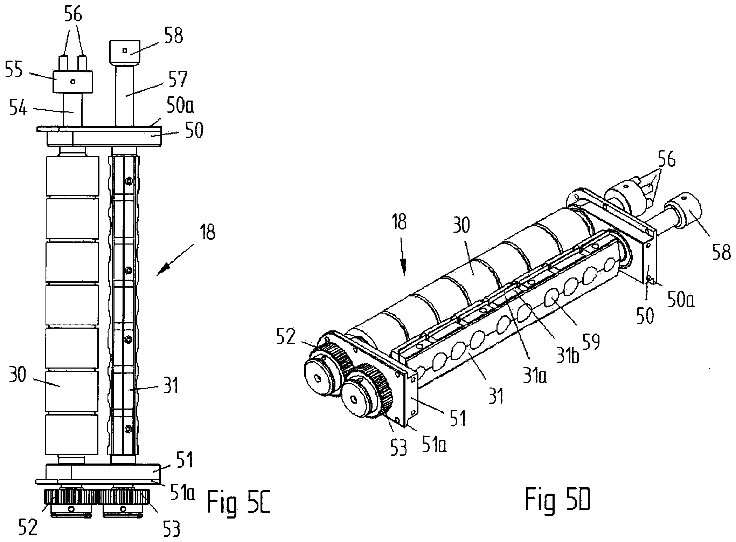

The cassette 18 is further shown in figures 5C and 5D. The anvil roll 30 and the blade roll 31 are bearing mounted in chambers 50, 51, which chambers are provided with flanges 50a,51 a for fitting accommodation in the plates 12. The flanges 50a, 51a are provided with attachment holes for attachment to the plates 12. At the front ends the rolls 30, 31 are provided with meshing gear wheels 52, 53. At the other end the roll 30 is provided with a shaft 54, having a coupling member 55, which, in this example, is provided with four drive pins 56. Said pins fit into holes disposed in the end of a driven shaft accessible at the front side of the housing 3. Said coupling is either effected or ended by sliding in shaft direction. In the coupling position the coupling is axially secured by attaching the sub-frame 7 to the frame 2.

At the other end the blade roll 31, which thus is driven via the roll 30 and the gear wheels 52,53, is provided with a shaft 57 having a rotation position indicator 58. The blade roll 31 carries a number of little plates having series of blade teeth 31a, which are held in holders 31b and leave short spaces in between them which spaces are adapted to the guiding wires 33 . The blade roll 31 is provided with cavities 59.

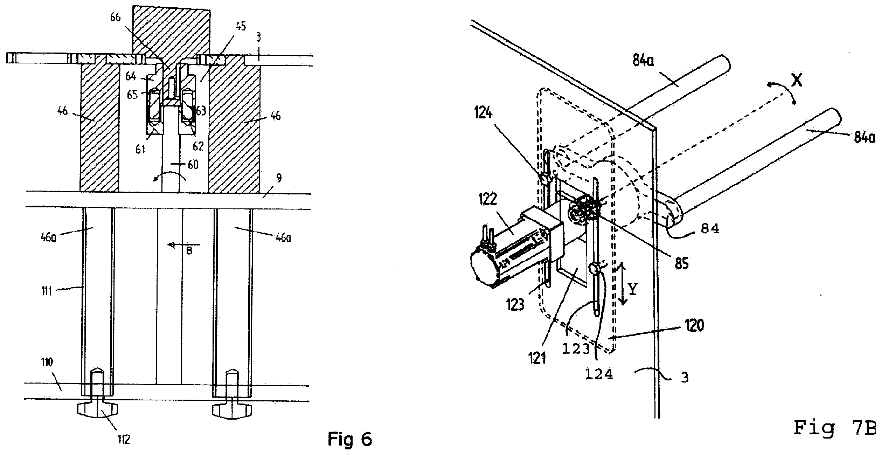

Figure 6 shows that a mortise and tenon joint can also be used for the drive shafts of the belt conveyors (see fixed coupling members 92, 93 and 94 in figure 5A). By way of example, a drive shaft 60 for the belt conveyor 9 is at its inner end provided with a flange 61 having -in this example four - coupling holes 62 for connecting pens 63. The connecting pens 63 are attached in holes 65 of a disk 64, that is rotation-fixedly attached to a drive end 66 of a drive accommodated in the housing 3. On either side of the drive shaft 60, equidistanced therefrom and parallel thereto, two beams 46 that are fixedly attached to the housing project, which at their ends merge into rods 46a, onto which pipes 111 accommodated in the frame 110 of the belt conveyor 9 can be slid and then be secured using for instance a screw knob 112.

Figure 7A shows a special suspension 47, which is predominantly suitable for the belt conveyor 10 with centre of gravity Z, on which items that may or may not be provided with an underleaf will be stacked or formed. The frame 80 of the stacking conveyor or stacker 10 comprises transverse rods 81a and transverse tubes 81b. At the inner end the drive shaft 82 is provided with a coupling member 85 having connecting pens as discussed above. At the other, outer end the shaft 82 is provided with a toothed belt pulley 82a, which via a toothed belt that is not shown drives toothed belt pulley 83a, that is rotation-fixed with drive roll 83 for driving the belts 42 (figure 1D). The coupling member 85 is attached to the output shaft of a motor 122 in a rotation-fixed manner, which motor is attached to a plate 120. On the plate 120 a disk 86 is attached, forming a unity with a bush 86a. Through the intermediary of a sliding sleeve 89, the bush 86a is fittingly accommodated in a bush 87, onto which a cross beam 84 is attached. The bush 87 is rotatable about bush 86a in directions X and can be secured thereto in the desired rotational position using set bolt 89. At the outer side of the cross beam 84 rods 84b are attached, which are slidably yet fittingly accommodated in said tubes 81b, and then secured against axial sliding by screw knobs 88, so that the frame 80 is thus secured to the cross beam 84 and follows the adjustment thereof in direction X.

Figures 7A and 7B furthermore show that the vertical position of the assembly of the drive motor 122 for the drive shaft 82 and the coupling 85-87 can be set in direction Y. For that purpose the housing 3 is provided with an opening 121, permitting the transfer of the said assembly in Y-direction. For securing at the desired height bolts 124 are present that are slidable in vertical slots 123 and accessible from the inside of the housing 3 to be released or secured.

Figures 7B and 7C show that because of the rotatable arrangement of the Beam 84 and therewith the conveyor 10, the vertical distance t between the output end 9b and the upper surface of the conveyor 10 can be adjusted by tilting in direction X and displacing in direction Y, for adjustment to thin items P1 or to thick items P2. Due to a combination of both adjustment options, the output end 10b, as shown, can retain its height position, as a result of which height adjustment in downstream stations is not required.

The above description is included to illustrate the operation of preferred embodiments of the invention and not to limit the scope of the invention. Starting from the above explanation many variations that fall within the spirit and scope of the present invention will be evident to an expert.

## Claims

1. Conveyance device for items, comprising:
- a frame with a housing;
- at least one belt conveyor for the items, which belt conveyor is provided with a feed end and an output end;
- a drive for the belt conveyor, which drive comprises a drive shaft and a driven drive roll for the belt of the belt conveyor and a transmission between the drive shaft and the drive roll,
wherein the drive shaft extends through a holder attached to the housing, which holder bears a support for the belt conveyor, which support comprises at least one support member extending adjacent the drive shaft and being releasably connected to the belt conveyor.

2. Conveyance device according to claim 1, wherein the support member extends parallel to the drive shaft, preferably over at least almost the width of the conveyor.

3. Conveyance device according to claim 1 or 2, wherein the support has two support members extending on either side of the drive shaft, preferably equidistanced from the drive shaft.

4. Conveyance device according to claim 1, 2 or 3, wherein the belt conveyor has a frame that can be slid onto or into the support members, wherein preferably, the frame of the belt conveyor comprises pipes or rods, in which or on which the support members can be fittingly accommodated, wherein the support members preferably can be secured in the pipes or rods against sliding in longitudinal direction, for instance by screw knobs.

5. Device according to any one of the claims 1-4, wherein the drive comprises a first drive part accommodated in the housing and comprising a motor, and a second drive part comprising the drive shaft, wherein the first and the second drive part are provided with first and second coupling members that can be releasably coupled to each other for rotational driving of the drive shaft.

6. Device according to claim 5, wherein the location of coupling is situated within the holder and/or partially within the housing.

7. Conveyance device according to claim 5 or 6, wherein the first and the second coupling member form a multiple axial mortise and tenon joint.

8. Conveyance device according to any one of the claims 1-7, wherein the drive shaft has a rotary centre line that at least almost contains the centre of gravity of the belt conveyor.

9. Conveyance device according to any one of the claims 1-8, wherein the support with the support member is attached to the frame so as to be tiltable in a vertical plane containing the process direction, wherein the tilting motion has a tilt centre line coinciding with the rotary centre line of the drive shaft in question,
furthermore provided with an adjustment device for adjusting the angle of tilt of the conveyor in question in the vertical plane.

10. Device for conveying items, such as food items, comprising:
- a frame;
- a first conveyor for the items that is arranged on the frame, which first conveyor is provided with a feed end and an output end and a first drive;
- a second conveyor for the items that is arranged on the frame, downstream from the first conveyor in process direction, which second conveyor is a stacker in particular, the second conveyor being provided with a feed end and an output end and a drive,
wherein at the output end of the first conveyor the first conveyor and the second conveyor define a vertical intermediate space,
wherein the height of the intermediate space can be adjusted.

11. Device according to claim 10, wherein the output end of the first conveyor extends over the feed end of the second conveyor.

12. Device according to claim 10 or 11, having a control for selectively driving the second conveyor in two opposing directions.

13. Device according to claim 10, 11 or 12, wherein the first conveyor and/or the second conveyor is attached to the frame so as to be tiltable in a vertical plane containing the process direction, by means of a respective first or second support,
furthermore provided with an adjustment device for adjusting the angle of tilt of the conveyor in question in the vertical plane, wherein, preferably, the respective conveyor is a belt conveyor having a first and a second drive shaft, respectively, which for driving is coupled to a respective motor of the drive, wherein in the tilting motion the first or second support can be pivoted about a centre line coinciding with the rotary centre line of the drive shaft in question, wherein, preferably, the support in question has two support members extending on either side of the drive shaft, in particular parallel thereto, preferably equidistanced therefrom, wherein, preferably, the drive shaft has a rotary centre line that contains at least almost the centre of gravity of the belt conveyor.

14. Device according to any one of the claims 10-13, wherein the first conveyor and/or the second conveyor is attached to the frame so as to be vertically moveable in a vertical plane containing the process direction, by means of a respective first or second support,
furthermore provided with an adjustment device for adjusting the vertical position of the support of the conveyor in question.

15. Device according to any one of the claims 10-14, furthermore comprising
- a leaf supplier for supplying leaves to the feed end of the first conveyor and
- an item supplier for supplying items to the feed end of the first conveyor,
- a control for adapting the item supplier and the leaf supplier to one another so that the items on the first conveyor are supported on the leaves.

16. Device for placing items, such as food items on leaves, comprising:
- a frame having an item supplier for the items, which item supplier is provided with a feed end and an output end;
- a discharger for items placed on leaves that is arranged on the frame, the discharger being provided with a feed end and an output end,
wherein the item supplier and the discharger define a transition area at their respective output end and feed end; and
- a stock holder for a web of leaf material;
- a leaf supplier for the leaves, which leaf supplier is provided with a first drive for the web of leaf material, with a separator device for consecutively separating leaves from the web of leaf material and with a second drive for passing them to the transition area,
wherein the leaf supplier is positioned in the frame below the transition area for upward delivery of the leaves in the transition area,
wherein the discharger is designed as a belt conveyor which at the feed end has an end roll for the belt of the belt conveyor,
wherein the leaf supplier is provided with first and second guides for guiding the leaves in an upward path at least from the separator device into the transition area, and
wherein the first and second guide are situated on the sides of the upward path facing the item supplier and facing the discharger, respectively, **characterised in that**,
the first guide extends upwards to above the level of the lower side of the end roll.

17. Device according to claim 16, wherein the first guide extends upwards up to or above the rotary centre line of the end roll.

18. Device according to claim 16 or 17, wherein the item supplier is designed as a belt conveyor, at the output end having an end roll designed as a nose roll.

19. Device according to claim 18, wherein the nose roll is pivotable between a folded down belt operational position at a relatively short distance from the feed end of the discharger and a folded up maintenance position at a larger distance from the feed end of the discharger in which the upper end of the first guide is accessible to at least the fingers of a hand.

20. Device according to any one of the claims 16-19 or according to the preamble of claim16, wherein the first guide comprises a number of elongated guide elements, such as wires, and a transverse rod in the upper end of the first guide, to which rod the guide elements are connected, wherein the transverse rod is movable between an operational position at a relatively short distance from the feed end of the discharger and a maintenance position at a larger distance from the feed end of the discharger, for providing access to the fingers of a hand between the first and second guides, wherein preferably the transverse rod is moveable by swinging about a horizontal centre line transverse to the transport direction of the discharger, which centre line preferably is situated below the second drive.

21. Device according to claim 20, wherein the transverse rod is situated entirely above the level of the lower side of the end roll of the discharger, preferably entirely above the rotary centre line of the end roll of the discharger.

22. Device according to any one of the claims 16-21 or according to the preamble of claim 16, wherein the second drive of the leaf supplier comprises a nip having a driven drive roll and an idle counter roll, wherein the drive roll and the counter roll are situated on either side of the upward path, respectively, preferably on the sides of the upward path facing the discharger and facing the item supplier, respectively, and wherein the counter roll can be biased towards the drive roll by means of a biasing device and can be released from the biasing device for movement of the counter roll between an operational position at a relatively short distance from or against the drive roll and a maintenance position at a larger distance from the drive roll.

23. Device according to claim 22, wherein the counter roll is attached to a holder, which itself is biased by the biasing device for biasing the counter roll towards the drive roll and can be released therefrom by activating the biasing device in a direction opposite the biasing direction.

24. Device according to claim 22or 23, wherein the counter roll/holder can be moved by swinging about a horizontal centre line transverse to the transport direction of the discharger, which centre line preferably is situated below the second drive, preferably below the first drive as well, preferably straight below the first drive.

25. Device according to claim 24, wherein in the maintenance position the counter roll is situated lower than it is in the operational position.

26. Device according to any one of the claims 22-25, wherein the biasing device is provided with cylinders, in particular pneumatic cylinders, for biasing the counter roll towards the drive roll, which cylinders can also be operated for blocking against said movement and releasing the counter roll for said movement, respectively.

27. Device according to any one of the claims 16-26 or according to the preamble of claim 16, wherein the first drive of the leaf supplier comprises a nip having a driven drive roll and an idle counter roll, wherein the drive roll and the counter roll are situated on the sides of the upward path facing the discharger and facing the item supplier, respectively, and wherein the counter roll is moveable between an operational position at a relatively short distance from the drive roll and a maintenance position at a larger distance from the drive roll, wherein preferably, the counter roll can be moved by swinging about a horizontal centre line transverse to the transport direction of the discharger.

28. Device according to claim 27, provided with cylinders, in particular pneumatic cylinders, for biasing the counter roll towards the drive roll, which cylinders can also be activated oppositely so that the counter roll is moveable away from the drive roll, wherein preferably the cylinders are positioned substantially vertically with the workload direction preferably upwards.

29. Device according to claim 27 or 28, wherein the counter roll is attached to a holder, which itself is biased by the biasing device for biasing the counter roll towards the drive roll and which is swingable away from the drive roll by activating the biasing device in a direction opposite the biasing direction.

30. Device according to claims 24 and 29, wherein the said horizontal centre lines coincide.

31. Device according to any one of the claims 16-30, provided with a conveyor arranged downstream from the discharger, at its output end, for receiving the items placed on leaves and forming them into a stack.

32. Assembly of a device according to any one of the claims 16-31 and a supply device for the items, which supply device is positioned for delivery of the items to the item supplier, the supply device for instance being a cutting device for supplying slices or supplying pieces of meat, poultry or fish, such as hamburgers, chicken fillets, or fish fillets.

33. Device for placing items on leaves, comprising:
- a frame having an item supplier for the items, which item supplier is provided with a feed end and an output end;
- a discharger for items placed on leaves, which discharger is provided with a feed end and an output end,
wherein the item supplier and the discharger define a transition area at their respective output end and feed end; and
- a stock holder for a web of leaf material;
- a leaf supplier for the leaves, which leaf supplier is provided with a first drive for the web of leaf material, with a separator device for consecutively separating leaves from the web of leaf material by perforating, making incisions or cutting through, and with a second drive for passing the leaves to the transition area,
wherein the leaf supplier is positioned in the frame at, preferably below, the transition area for delivery, preferably upward delivery, of the leaves in the transition area, wherein the leaf supplier is arranged in a sub-frame, which is releasably attached in the frame, wherein the separator device comprises a blade roll and a counter roll, that are drivingly connected to each other, wherein the blade roll and the counter roll are attached in a cassette that is releasably attached in the sub-frame as one unity.

34. Device according to claim 33, wherein the cassette can be slid in and out of the sub-frame in a substantially horizontal direction, preferably in a direction parallel to the transport direction of the discharger.

35. Device according to claim 33 or 34, wherein at the ends of the rolls the cassette is provided with chambers, in which the rolls are bearing mounted, which chambers are also formed for forming a sliding connection with the sub-frame.

36. Device according to claim 33, 34 or 35, wherein the blade roll and the counter roll are situated on the sides of the upward path facing the item supplier and facing the discharger, respectively.

37. Device according to any one of the claims 33-36, wherein the blade roll is provided with cavities.

38. Device according to claim 15 and according to any one of the claims 16-31, wherein the first conveyor is the discharger for items placed on leaves.

39. Assembly of a device according to claim 38 and a supply device for the items, which supply device is positioned for delivery of the items to the item supplier, which supply device for instance is a cutting device for supplying slices or supplying pieces of meat, poultry or fish, such as hamburgers, chicken fillet or fish fillets.

40. Device for conveying items, such as food items, comprising:
- a frame;
- a belt conveyor for the items that is arranged on the frame and with a drive shaft for driving the belt conveyor,
wherein by means of a support, the belt conveyor is attached to the frame so as to be tiltable in a vertical plane containing the process direction,
further provided with an adjustment device for adjusting the angle of tilt of the conveyor in question in the vertical plane,
wherein in the tilting motion the support is pivotable about a centre line coinciding with the rotary centre line of the drive shaft.

41. Device according to claim 40, wherein the support has two support members extending on either side of the drive shaft, in particular parallel thereto, preferably equidistanced therefrom.

42. Device according to claim 41, wherein the drive shaft has a rotary centre line that at least almost contains the centre of gravity of the belt conveyor.

43. Device according to claim 40, 41 or 42, wherein the belt conveyor is part of a serial arrangement of at least two conveyors, preferably arranged on the same frame including an upstream first conveyor and a second conveyor situated downstream therefrom, wherein the second conveyor is the belt conveyor and with its feed end is situated at a level below the output end of the first conveyor.

44. Device according to any one of the claims 40-43, comprising a drive for selectively driving the belt conveyor in two opposing directions.

45. Device for consecutively separating leaves from a web of leaf material, comprising:
- a frame;
- a separator device arranged in the frame for consecutively separating leaves from the web of leaf material;
- a stock holder arranged in the frame for a roll of the web of leaf material;
- a drive arranged in the frame for transporting the web of leaf material from the roll towards the separator device;
- a number of dancer rolls arranged in the frame between the stock holder and the drive,
wherein at least one of the dancer rolls is arranged on an arm that is attached to the frame so as to be rotatable in a vertical plane, wherein the device furthermore comprises a pneumatic cylinder that is operative between the arm and the frame and a control for adjusting the workload of the pneumatic cylinder.

46. Device according to claim 45, provided with two such arms each having at least one dancer roll, wherein each arm is provided with a said pneumatic cylinder.

47. Device according to claim 46, wherein each arm bears at least two dancer rolls.

48. Device for placing items, such as food items, on leaves, comprising:
- a frame having an item supplier for the items, which item supplier is provided with a feed end and an output end;
- and a discharger for items placed on leaves, which discharger is provided with a feed end and an output end,
wherein the item supplier and the discharger define a transition area at their respective output end and feed end; and
- a stock holder for a web of leaf material;
- a device according to claims 45, 46 or 47, provided with a drive for consecutively passing separated leaves to the transition area,
wherein the drive is positioned in the frame below the transition area for upward delivery of the leaves in the transition area.

49. Assembly of a device according to claim 48 and a supply device for the items, which supply device is positioned for delivery of the items to the item supplier, the supply device for instance being a cutting device for supplying slices or supplying pieces of meat, poultry or fish, such as hamburgers, chicken fillets or fish fillets.

50. Device provided with one or more of the characterising measures described in the attached description and/or shown in the attached drawings.
